# EUROPÄISCHE PATENTSCHRIFT

(11) **EP 2 102 954 B1**
(45) Veröffentlichungstag und Bekanntmachung des Hinweises auf die Patenterteilung: **22.02.2017**
(21) Anmeldenummer: 07802015.3
(22) Anmeldetag: 30.08.2007
(51) Int. Cl.: H02B 11/133, H02B 1/28

(54) **STECKGEHÄUSEMODUL**
PLUG-IN HOUSING MODULE
MODULE DE BOÎTIER ENFICHABLE

(30) Priorität: 08.11.2006 DE 102006052717
(43) Veröffentlichungstag der Anmeldung: 23.09.2009
(73) Patentinhaber: Eaton Protection Systems IP GmbH & Co. KG, 12529 Schönefeld (DE)
(72) Erfinder: NAUMANN, Reiner, 68239 Mannheim (DE); SCHWARZ, Gerhard, 69436 Schönbrunn (DE); REINHART, Markus, 74855 Hassmersheim (DE)
(74) Vertreter: Grünecker Patent- und Rechtsanwälte PartG mbB
(86) Internationale Anmeldenummer: PCT/EP2007/007596
(87) Internationale Veröffentlichungsnummer: WO 2008/055558

(56) Entgegenhaltungen:
- EP-A- 0 253 758
- WO-A-91/03088
- DE-C1- 3 917 089
- US-A- 4 831 489

## Beschreibung

Die Erfindung betrifft ein Steckgehäusemodul zur Bildung einer insbesondere explosionsgeschützten Schalt- und/oder Verteileranlage. Diese weist in der Regel eine Mehrzahl von Steckplätzen für solche Steckgehäusemodule auf. Das Steckgehäusemodul kontaktiert bei Einnahme seiner Einsteckstellung elektrische Verbindungsleitungen und ist in der Einsteckstellung an Tragschienen oder dergleichen eines Gerüsts der Schalt-Nerteileranlage lösbar befestigt.

Solche Schalt-/Verteileranlagen weisen in der Regel standardisierte Wand- oder Standgerüste auf, in denen die Mehrzahl der Steckplätze angeordnet ist. Die entsprechenden Steckgehäusemodule sind in der Regel in der Zündschutzart "druckfeste Kapselung" (Ex-d) ausgebildet. Die entsprechenden Steckgehäusemodule kontaktieren automatisch entsprechende elektrische Verbindungseinrichtungen bei Einnahme ihrer Einsteckstellung im zugehörigen Steckplatz. Insgesamt wird durch die Steckgehäusemodule und die übrigen Einrichtungen eine Schalt-/Verteileranlage in der Zündschutzart "erhöhte Sicherheit" (Ex-e) gebildet.

Die Abmessungen der einzelnen Steckplätze können unterschiedlich zur Aufnahme entsprechend unterschiedlich ausgebildeter Steckgehäusemodule sein.

Die Materialien für Steckgehäusemodule oder auch Wand- oder Standgerüste der Anlage sind beispielsweise Kunststoff, insbesondere Polyamid für die Module und Metall, insbesondere Stahl für die entsprechenden Gerüste.

Die Modulbauweise erlaubt eine schraubenlose Stecktechnik, wodurch entsprechende Schalt-/Verteileranlagen kostengünstig und übersichtlich nach dem Baukastenprinzip aufbaubar sind.

Die entsprechenden Module weisen dem jeweiligen Steckplatz entsprechende Rastermaße auf.

Innerhalb der Steckgehäusemodule sind elektrische oder elektronische Einrichtungen angeordnet, wie beispielsweise Steuergeräte, Steuerelemente, Befehlsgeber, Schutzschalter oder dergleichen.

Bei einer aus der Praxis bekannten Schalt-/Verteileranlage mit Steckgehäusemodulen ist es notwendig, zum Austausch eines Steckgehäusemoduls die Anlage über einen Hauptschalter auszuschalten und durch eine speziell ausgebildete Person den Austausch vorzunehmen, da ansonsten die Anforderung an den Explosionsschutz nicht erfüllt würden.

US 4,831,489 A beschreibt eine Steuereinheit, die in Aufnahmeräume eines Schaltschrankes einschiebbar ist. In vollständig eingeschobener Stellung kontaktiert die Steuereinheit entsprechend elektrische Verbindungseinrichtung in Form von Stromschienen. In der eingeschobenen Stellung ist die Steuereinheit in dem Aufnahmeraum lösbar befestigt. Zum Lösen der entsprechenden Befestigung kann von außen ein Schalter betätigt werden. In einer entsprechenden Lösestellung der Steuereinheit ist diese in eine Trennstellung bewegbar. Die Trennstellung ist durch eine mechanische Sperreinrichtung festgelegt und durch entsprechendes betätigen dieser Sperreinrichtung ist dann die Steuereinheit vollständig aus dem Aufnahmeraum ausziehbar.

EP 0 253 758 A1 beschreibt eine elektrische Schaltanlage in schlagwetter-geschützter Ausführung mit einer Steckvorrichtung. Die Schaltanlage weist einen Sammelschienenkanal auf, in den Sammelschienen angeordnet sind. Mit diesen Sammelschienen sind Kontaktelemente eines Dosenteiles einer Steckvorrichtung verbunden, zu der ein Steckteil gehört, das an einem druckfesten Gehäuse angebracht ist. In Betriebsstellung des druckfesten Gehäuses ist der Steckerteil der Steckvorrichtung vollständig im Dosenteil aufgenommen. Es sind weiterhin Schutzorgane vorhanden, die eine obere Begrenzung eines Einfahrraumes für das druckfeste Gehäuse bilden. Ein solches Schutzorgan verhindert insbesondere ein unzulässiges Öffnen einer Tür des druckfesten Gehäuses.

Vorliegender Erfindung liegt die Aufgabe zugrunde, ein Steckgehäusemodul der eingangs genannten Art dahingehend zu verbessern, dass ohne Spannungsfreischaltung der gesamten Anlage auch durch eine nicht speziell ausgebildete Person ein Steckgehäusemodul in einfacher Weise eingesetzt beziehungsweise aus seinem entsprechenden Steckplatz herausgezogen werden kann.

Diese Aufgabe wird durch die Merkmale des Patentanspruchs 1 gelöst.

Das Steckgehäusemodul weist wenigstens eine von außen zum Schalten zwischen einer Verriegelungs- und einer Lösestellung zugängliche Schalteinrichtung auf. In Verriegelungsstellung ist das Steckgehäusemodul in seiner Einsteckstellung innerhalb des Steckplatzes fixiert. In der Lösestellung kann es aus dem Steckplatz herausgezogen werden. Allerdings kann das Herausziehen in Lösestellung der Schalteinrichtung nur bis in eine Trennstellung erfolgen, wobei in dieser Trennstellung der Kontakt zu den elektrischen Verbindungseinrichtungen unter Aufrechterhaltung einer zünddurchschlagssicheren mechanischen Verbindung getrennt ist. Das heißt, in Trennstellung sind die entsprechenden elektrischen und elektronischen Komponenten innerhalb des Steckgehäusemoduls spannungsfrei, wobei gleichzeitig durch die noch vorhandene mechanische zünddurchschlagssichere Verbindung den Anforderungen an den Explosionsschutz bei Bewegen des Steckgehäusemoduls aus der Einsteckstellung in die Trennstellung genügt wird.

Die Trennstellung ist mittels insbesondere einer mechanischen Sperreinrichtung relativ zum Steckplatz festgelegt. Erst nach Lösen dieser mechanischen Sperreinrichtung kann das Steckgehäusemodul vollständig aus dem Steckplatz herausgezogen werden.

Analog werden die entsprechenden Schritte beim Einsetzen des Steckgehäusemoduls in seinen Steckplatz durchlaufen. Das heißt, zuerst wird die Trennstellung eingenommen, in der bereits die entsprechende mechanische zünddurchschlagssichere Verbindung zwischen Steckgehäusemodul und Steckplatz eingenommen wird und anschließend erfolgt das weitere Einsetzen in Einsteckstellung unter gleichzeitiger Kontaktierung der elektrischen Verbindungseinrichtung. Ist das Steckgehäusemodul vollständig in Einsteckstellung angeordnet, kann es in dieser Stellung durch Verstellen der Schalteinrichtung in Verriegelungsstellung fixiert werden.

Die Schalteinrichtung weist eine mit einem Handgriff verbundene Schaltwelle aufweist. Die Schaltwelle ist mit entsprechenden Komponenten wie Schaltern oder dergleichen in Verbindung, die die Spannungsfreischaltung beziehungsweise Spannungsaufschaltung ermöglichen. Gleichzeitig wird durch die Schaltwelle ein entsprechendes Verriegelungselement der Schalteinrichtung zwischen Ent- und Verriegelungsstellung bewegt. In Verriegelungsstellung ist das Steckgehäusemodul im Steckplatz fixiert und in der Entriegelungsstellung ist das entsprechende Verriegelungselement entriegelt und damit die Schalteinrichtung in Lösestellung.

Die entsprechende Tätigkeiten erfordern kein allgemeines Abschalten der Schalt-/Verteileranlage und können durch eine hinsichtlich des Explosionsschutzes und der in diesem Zusammenhang zu beachtenden Anforderungen nicht speziell ausgebildete Personen durchgeführt werden.

Um die elektrischen/elektronischen Komponenten innerhalb des Steckgehäusemoduls in einfacher Weise druckfest und zünddurchschlagssicher anordnen zu können, kann das Steckmodulgehäuse aus zumindest zwei Gehäuseteilen durchschlagssicher zusammengesetzt sein.

Um das Zusammensetzen in diesem Zusammenhang zu vereinfachen, können die Gehäuseteile aufeinander zuweisende Ränder aufweisen, die durch Vibrationsschweißen und insbesondere lineares Reibschweißen miteinander verbunden sind. Zusätzliche Maßnahmen zur Verbindung der Gehäuseteile sind nicht erforderlich.

Um vor Einstecken oder Herausziehen des Steckgehäusemoduls in beziehungsweise aus dem Steckplatz die entsprechenden elektrischen/elektronischen Komponenten spannungsfrei zu schalten, kann das Steckgehäusemodul über eine entsprechende Spannungsschalteinrichtung verfügen. Bei einem vereinfachten Ausführungsbeispiel kann die oben genannte Schalteinrichtung als Spannungsschalteinrichtung ausgebildet sein, welche in Verriegelungsstellung in Ein- und in Lösestellung in Ausschaltstellung relativ zur Spannungsversorgung ist.

Auf diese Weise wird nur durch Betätigen der Schalteinrichtung sowohl die Verriegelung beziehungsweise das Lösen des Steckgehäusemodul als auch das Ein- und Ausschalten bewirkt.

Eine Möglichkeit zur Realisierung des Verriegelungselements ist ein Verriegelungsstift, der in Verriegelungsstellung aus dem Steckgehäusemodul vorsteht und in Eingriff mit einer Verriegelungsaufnahme des Steckplatzes ist. Entsprechend ist der Verriegelungsstift in Entriegelungsstellung aus der Verriegelungsaufnahme herausgezogen und kann bis in das Steckgehäusemodul zurückziehbar sein.

Um in einfacher Weise das Verriegelungselement durch die Schaltwelle zwischen Verriegelungsstellung und Entriegelungsstellung bewegen zu können, kann das Verriegelungselement an seinem der Schaltwelle zuweisenden Ende in einer mit der Schaltwelle bewegungsverbundenen Schlitzplatte innerhalb einer Schlitzführung beweglich gelagert sein. Bei entsprechender Bewegung der Schaltwelle bewegt sich die Schlitzplatte in entsprechender Weise, wobei die Schlitzführung das entsprechende Ende des Verriegelungselements bewegt und dadurch dieses in Verriegelungs- beziehungsweise Entriegelungsstellung verstellt.

In einfacher Weise kann die Schlitzführung einen Führungsschlitz aufweisen, dessen Abstand zur Schaltwelle in Lösestellung zur Einnahme der Entriegelungsstellung am geringsten ist. Entsprechend nimmt der Abstand des Führungsschlitzes zu, wenn die Schlitzplatte mit der Schaltwelle verschwenkt wird, um das Verriegelungselement in Verriegelungsstellung zu verschieben.

Es sind andere Kopplungen zwischen insbesondere Schaltwelle und Verriegelungswelle möglich, um durch Drehen der Schaltwelle das Verriegelungselement im Wesentlichen linear zwischen Verriegelungsstellung und Entriegelungsstellung zu bewegen. Eine weitere Möglichkeit sind entsprechende Nocken oder dergleichen.

Bei einem Ausführungsbeispiel kann die Schlitzplatte im Wesentlichen senkrecht zur Schaltwelle angeordnet sein. Der entsprechende Führungsschlitz erstreckt sich dann in einer Ebene quer zur Schaltwelle, wobei sich das Verriegelungselement ebenfalls in dieser Ebene oder parallel zu dieser Ebene erstrecken kann und über ein entsprechend ausgebildetes Ende mit dem Führungsschlitz in Eingriff ist. Ein entsprechendes ausgebildetes Ende kann beispielsweise ein in Richtung Führungsschlitz umgebogener Endabschnitt oder ein am freien Ende seitlich abstehender Führungsbolzen oder dergleichen sein.

Um sicherzustellen, dass das Steckgehäusemodul aus seiner Einsteckstellung nur bis in die Trennstellung ohne weitere Handgriffe bewegbar ist, und gleichzeitig ein Einstecken des Steckgehäusemoduls ohne weitere Tätigkeiten möglich ist, kann die Sperreinrichtung insbesondere ein selbsttätig mit einer Rastaufnahmeeinrichtung am Steckplatz bei Bewegung in Richtung Einsteckstellung verrastendes Einrastelement aufweisen. Durch den entsprechenden Rasteingriff bei Bewegung in Einsteckstellung ist einerseits sichergestellt, dass keine zusätzliche Tätigkeit beim Einsetzen des Steckgehäusemoduls erforderlich ist, und andererseits muss die Raststellung erst gelöst werden, um das Steckgehäusemodul über die Trennstellung hinaus vollständig aus dem Steckplatz herauszuziehen.

Eine einfache Möglichkeit des Verrastens kann darin gesehen werden, wenn das Einrastelement seitlich vom Steckgehäusemodul vorsteht und entlang einer entgegengesetzt zur Einsteckrichtung des Steckgehäusemoduls offenen Einsetznut als Rastaufnahmeeinrichtung bewegbar ist. Beim entsprechenden Einsetzen wird das Einrastelement selbsttätig in die Einsetznut bewegt und ist mit dieser in Rasteingriff. Zum Lösen des Einrastelements aus der Einsetznut ist eine zusätzliche Entrasttätigkeit erforderlich.

Vorteilhafterweise kann das Einrastelement im Steckgehäusemodul im Wesentlichen quer zur Einsteckrichtung in Auslenkrichtung verschieblich gelagert sein. Durch diese verschiebliche Lagerung kann es Krümmungen oder Absätzen der Einsetznut zumindest bei Verschieben des Steckgehäusemoduls in Richtung Einsteckstellung einfach folgen, während dies in umgekehrter Richtung unterbunden ist. Eine einfache Möglichkeit zu einer solchen Unterbindung kann darin gesehen werden, wenn das Einrastelement in Auslenkrichtung federbeaufschlagt ist. Dadurch wird es immer in eine Richtung in Auslenkrichtung gedrückt, so dass es dort der entsprechenden Kontur der Einsetznut folgen kann. In umgekehrter Richtung muss es gegebenenfalls gegen die Federbeaufschlagung manuell oder in anderer Weise ausgelenkt werden, um die Einsetznut zum vollständigen Entfernen des Steckgehäusemoduls aus dem Steckplatz zu veranlassen.

Bei einem günstigen Ausführungsbeispiel kann die Einsetznut zumindest eine an ihrem offenen Ende schräg nach unten in Einsteckrichtung verlaufende Einsetzschräge aufweisen. Durch diese wird zu Beginn des Einsetzens des Steckgehäusemodul das Einrastelement selbsttätig ausgelenkt und in Richtung Einsetznut beziehungsweise zu derem offenen Ende geführt. Diese Auslenkung durch die Einsetzschräge erfolgt vorteilhafterweise gegen die Federbeaufschlagung.

In Einsteckrichtung unterhalb der Einsatzschräge kann ein im Wesentlichen quer zur Einsteckrichtung verlaufender Anschlag gebildet sein. Die entsprechende Federbeaufschlagung des Einrastelements erfolgt in Auslenkrichtung beziehungsweise Querrichtung zum Anschlag. Dadurch ist im Wesentlichen die Trennstellung festgelegt, bei der das Einrastelement unterhalb der Einsetzschräge am Anschlag anliegt. Erst durch entsprechende Krafteinwirkung gegen die Federbeaufschlagung ist das Einrastelement außer Eingriff mit dem Anschlag zu bewegen und dann anschließend zum offenen Ende der Einsatznut mit dem Steckgehäusemodul bewegbar.

Weitere analoge Anschläge können entlang der Einsetznut gebildet sein, um verschiedene Relativpositionen zwischen Steckgehäusemodul und Steckplatz festzulegen. Es besteht ebenfalls die Möglichkeit, einen entsprechenden Anschlag auch beim Einsetzen des Steckgehäusemoduls in den Steckplatz vorzusehen, so dass dieses nicht direkt und ohne weitere Einwirkung auf das Einrastelement bis in Einsteckstellung in den Steckplatz einschiebbar ist.

Um allerdings eine einfache Bewegung des Steckgehäusemoduls aus Trennstellung in Einsteckstellung und umgekehrt sicherzustellen, kann die Einsetznut sich anschließend an den Anschlag im Wesentlichen in Einsteckrichtung erstrecken.

Um die entsprechenden Gehäuseteile mit darin angeordneten elektrischen/elektronischen Komponenten besser schützen zu können und gleichzeitig eine erhöhte Festigkeit des Steckgehäusemoduls zu erhalten, kann das Steckgehäusemodul einen die Gehäuseteile zumindest teilweise aufnehmenden Gehäuserahmen aufweisen. Dieser Gehäuserahmen kann sich insbesondere entlang von Ecken und Kanten des Steckgehäusemoduls erstrecken, indem er beispielsweise aus entsprechenden miteinander verbundenen Winkelprofilen oder dergleichen gebildet ist.

Um das Steckgehäusemodul einfach handhaben zu können, kann der Gehäuserahmen einen Handgriff aufweisen.

Es wurde bereits darauf hingewiesen, dass das Einrastelement zum Herausziehen des Steckgehäusemoduls aus der Trennstellung ausgelenkt wird, wobei dies vereinfacht dadurch möglich ist, wenn das Einrastelement einen vom Steckgehäusemodul vorstehenden Handhabungsendabschnitt aufweist. Dieser Handhabungsendabschnitt ist entsprechend mit dem Einrastelement verbunden und dient zu dessen Bewegung in Auslenkrichtung entgegen der Federbeaufschlagung.

Zur vereinfachten Betätigung kann in diesem Zusammenhang der Handhabungsendabschnitt in einem Führungsschlitz im Steckgehäusemodul verschieblich gelagert sein.

Eine einfache Möglichkeit zur Realisierung der elektrischen Verbindungseinrichtung kann darin gesehen werden, wenn diese durch elektrische Steck- oder Gegensteckkontakte am Steckplatz gebildet ist, wobei jeweils analog Gegen- beziehungsweise Steckkontakte am Steckgehäusemodul gebildet sind.

Die Kontakte können zum Schutz vor Beschädigungen von einem Rand umrandet sein.

Entsprechende Steckkontakte können kammförmig insbesondere mit Anschlussschienen verbunden sein.

Um die Kontakte zu schützen und deren Zusammenstecken zu vereinfachen, können Steck- und/oder Gegensteckkontakte innerhalb von jeweils zu den anderen Kontakten offenen Kontaktaufnahmen angeordnet sein.

Um mittels dieser Kontaktaufnahmen auch gleichzeitig die mechanische durchschlagssichere Verbindung in Trennstellung zu ermöglichen, können die Kontaktaufnahmen zumindest in Einsteckstellung und in Trennstellung ineinander gesteckt sein und in Trennstellung einen Freiraum zwischen freien Enden der getrennten Steck- und Gegensteckkontakte begrenzen.

Gleichzeitig besteht die Möglichkeit, einen Flammenlöschspalt zwischen einer Kontaktaufnahme und dem entsprechenden Kontakt in Trennstellung zu bilden.

Gut zusammensteckbare Steck- und Gegensteckkontakte können als Steckerstifte und Steckerbuchsen ausgebildet sein.

Um jedes Steckgehäusemodul einem Steckplatz genau zuordnen zu können, kann jedem Steckplatz eine Führung für das Steckgehäusemodul zugeordnet sein. Entlang dieser Führung wird das Steckgehäusemodul insbesondere mittels seines Gehäuserahmens bewegt, um gegebenenfalls eine Beschädigung der entsprechenden Gehäuseteile zu vermeiden.

Um das Einrastelement sicher in Trennstellung in Anlage mit dem Anschlag zu bewegen, kann die Einsetznut in Eintsteckrichtung nachfolgend zur Einsetzschräge ein in entgegengesetzter Richtung relativ zur Auslenkrichtung geneigte Ablenkschräge aufweisen. Diese Ablenkschräge erstreckt sich in Richtung der Federbeaufschlagung, so dass das Einrastelement sich durch die Federbeaufschlagung in der Einsetznut bis zur Anordnung unterhalb des Anschlags bewegt, so dass ohne weitere Hilfsmittel einerseits ein automatisches Führen des Einrastelements entlang der Einsetznut möglich ist und gleichzeitig das Einrastelement sicher in Richtung Anschlag bei Bewegen des Steckgehäusemoduls aus Einsteckstellung in Trennstellung bewegt wird.

Die Erfindung umfasst ebenfalls eine Schalt-/Verteileranlage mit einer Mehrzahl von Steckplätzen zum Einstecken von Steckgehäusemodulen nach der oben beschriebenen Art.

Im Folgenden wird ein vorteilhaftes Ausführungsbeispiel anhand der in der Zeichnung beigefügten Figuren näher erläutert.

Es zeigen:
- Figur 1: eine perspektivische Ansicht eines Steckgehäusemoduls gemäß Erfindung mit teilweise dargestellter Schalt-/Verteileranlage;
- Figur 2: das Steckgehäusemodul nach Figur 1 in perspektivischer Ansicht von unten aus Richtung seines Steckplatzes;
- Figur 3: eine vergrößerte Darstellung des Details X aus Figur 2;
- Figur 4: eine teilweise geschnittene Darstellung eines Steckgehäusemoduls im Bereich seines oberen Endes;
- Figur 5: eine Einsteckstellung eines Steckgehäusemoduls im zugehörigen Steckplatz mit Kontaktierung der elektrischen Verbindungseinrichtung;
- Figur 6: das Steckgehäusemodul in der Einsteckstellung nach Figur 5 im Bereich einer Sperreinrichtung;
- Figur 7: eine Ansicht analog zu Figur 5 in Trennstellung des Steckgehäusemoduls, und
- Figur 8: eine Darstellung analog zu Figur 6 mit Sperreinrichtung.

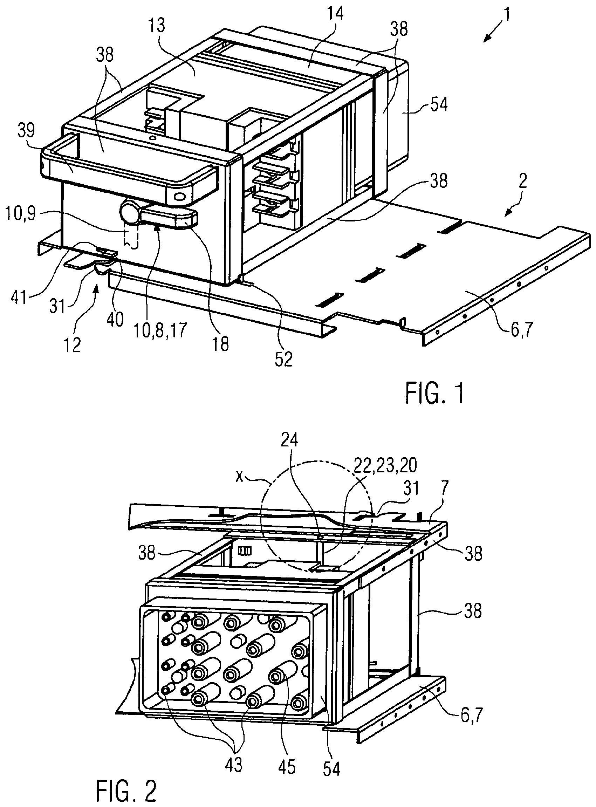

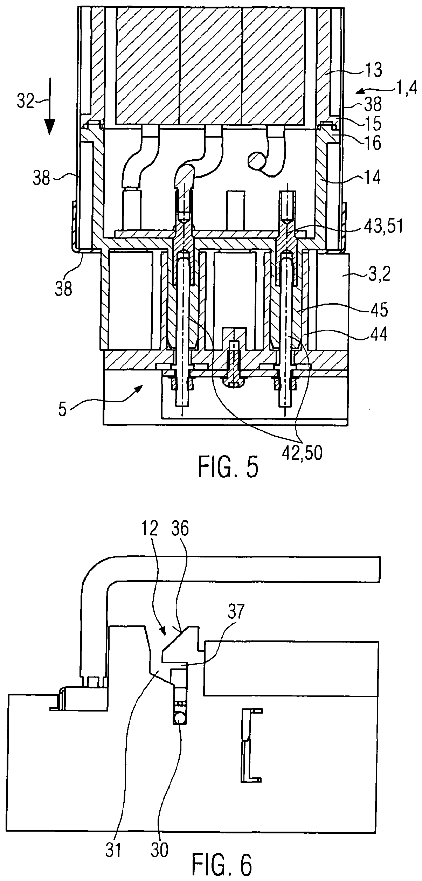

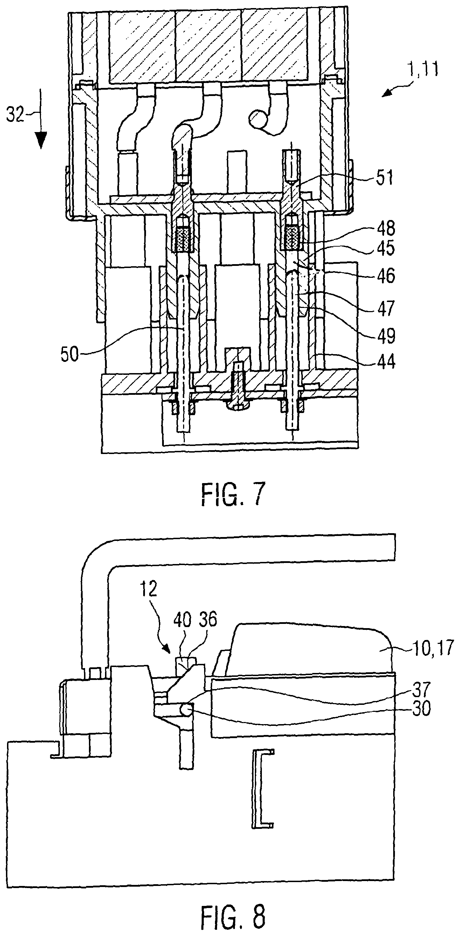

Figur 1 zeigt eine perspektivische Ansicht eines Steckgehäusemoduls 1 gemäß Erfindung. Dieses ist in einen Steckplatz 3, siehe auch Figuren 5 und 7, einer Schalt-Nerteileranlage 2 eingesteckt. Von der Schalt-/Verteileranlage 2 ist nur ein Teil eines entsprechenden Gerüsts 7 in Form einer Tragschiene 6 dargestellt. Auf dieser Tragschiene 6 sind Führungen 52 angeordnet, entlang denen das Steckgehäusemodul 1 bis in Einsteckstellung 4 in Einsteckrichtung 32, siehe auch Figuren 5 und 7, einschiebbar ist.

In der entsprechenden Einsteckstellung 4 kontaktieren Kontakte des Steckgehäusemoduls 1 entsprechende elektrische Verbindungseinrichtungen 5 des Steckplatzes, siehe beispielsweise Figur 5, wobei die entsprechenden Kontakte des Steckgehäusemoduls 1 von einem unteren Rand 54 umrandet sind. Das Steckgehäusemodul 1 weist einen Gehäuserahmen 38 auf, der zumindest aus einer Reihe von Profilen gebildet ist, die sich entlang von Kanten und Ecken des Steckgehäusemoduls 1 erstrecken. Innerhalb des Gehäuserahmens 38 sind zwei Gehäuseteile 13 und 14 angeordnet, die entlang aufeinander zuweisender Ränder 15, 16, siehe auch Figur 5, miteinander druckfest und durchschlagsicher verbunden sind. Die entsprechende Verbindung der Ränder kann durch Vibrationsschweißen und insbesondere lineares Reibschweißen erfolgen.

Innerhalb der Gehäuseteile 13, 14 sind entsprechende elektrische und elektronische Komponenten angeordnet. Es sei noch angemerkt, dass der entsprechende Gehäuserahmen 38 ebenfalls Seitenverkleidungsteile umfassen kann, die zur Vereinfachung in Figur 1 nicht dargestellt sind.

Am Gehäuserahmen 38 ist an einem Ende des Steckgehäusemoduls 1 ein Handgriff 39 angeordnet, der zum Transport des Steckgehäusemoduls 1 sowie zum Einschieben in Einsteckstellung 4 beziehungsweise zum Herausziehen aus der Schalt-/Verteileranlage 2 dient.

An diesem Ende ist weiterhin eine Schalteinrichtung 10 mit einem Handgriff 18 angeordnet, wobei die entsprechende Schalteinrichtung 10 mittels des Handgriffs 18 zwischen einer Verriegelungsstellung 9 und einer Lösestellung 8 verschwenkbar ist, siehe auch die gestrichelte Darstellung des Handgriffs 18 in Figur 1.

Bei dem dargestellten Ausführungsbeispiel ist die entsprechende Schalteinrichtung 10 gleichzeitig ein Spannungsschalter 17, der entsprechend in Verriegelungsstellung eine Spannungsversorgung ein- und in Lösestellung ausschaltet.

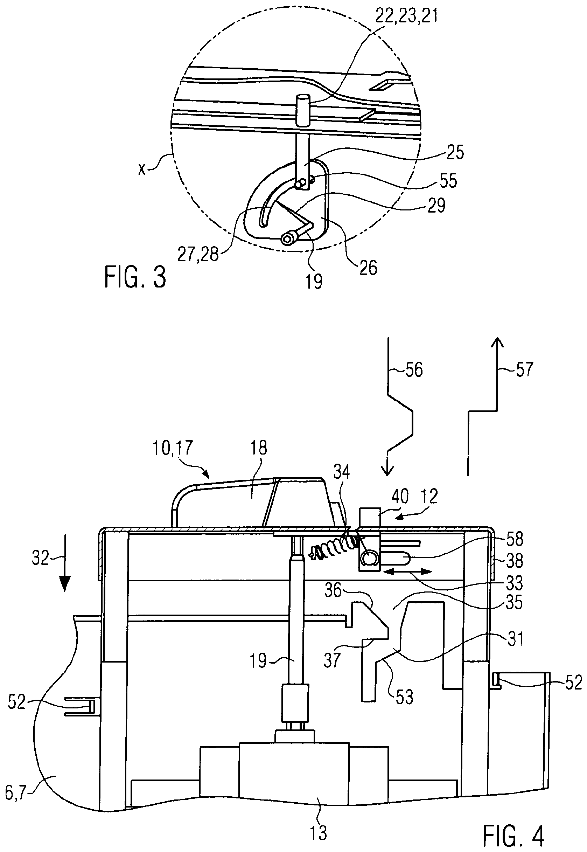

Benachbart zum Handgriff 18 steht aus dem entsprechenden Ende des Steckgehäusemoduls 1 ein Handhabungsendabschnitt 40 einer mechanischen Sperreinrichtung 12, siehe auch Figur 4, hervor. Dieser Handhabungsendabschnitt 40 ist entlang eines Führungsschlitzes 41 verstellbar.

Der Handhabungsendabschnitt 40 ist mit einem Einrastelement 30 verbunden, siehe nochmals Figur 4, welches entlang einer Einsetznut 31 bewegbar ist, wobei durch Einsetznut 31 und die vorgenannten Elemente (Einrastelement, Handhabungsendabschnitt, Schalteinrichtung) die entsprechende mechanische Sperreinrichtung 12 gebildet ist.

In Figur 2 ist eine perspektivische Ansicht von dem dem Steckplatz 3 zugeordneten Ende des Steckgehäusemoduls 1 analog zu Figur 1 dargestellt. Gleiche Teile kennzeichnen in dieser Figur sowie in den folgenden Figuren gleiche Merkmale und werden zum Teil nur noch teilweise im Zusammenhang mit einer Figur erwähnt.

Insbesondere ist in Figur 2 erkennbar, dass innerhalb des Randes 54 eine Mehrzahl von Kontakten 43 in Form von Gegensteckkontakten angeordnet sind, die bei Steckgehäusemodul in Einsteckstellung 4 mit entsprechenden Steckkontakten 42 des Steckplatzes 3 elektrisch verbunden sind.

Unterhalb des in Figur 1 dargestellten Endes ist im Inneren des Steckgehäusemoduls 1 als Teil der Schalteinrichtung 10 ein Verriegelungselement 22 erkennbar, das sich quer zum Steckgehäusemodul 1 in Form eines Verriegelungsstiftes 23 erstreckt. Dieser ist mit der Schalteinrichtung 10 bewegungsverbunden und zwischen einer Verriegelungsstellung 21, siehe auch Figur 3, und einer Entriegelungsstellung 20, siehe Figur 2, verstellbar. Zwischen Ent- und Verriegelungsstellung ist der entsprechende Verriegelungsstift 23 im Wesentlichen linear bewegbar, wobei er in Verriegelungsstellung 21 in eine entsprechende Verriegelungsaufnahme 24 des Gerüstes 7 der Schalt-/Verteileranlage 2 eingreift. Bei dem dargestellten Ausführungsbeispiel ist die Verriegelungsaufnahme 24 als kreisförmige Bohrung ausgebildet. Bei Anordnung in Verriegelungsstellung 21 ist ein Herausziehen des Steckgehäusemoduls 1 aus der Schalt-/Verteileranlage 2 nicht möglich. Erst bei Verdrehen der Schalteinrichtung 10 in Lösestellung 9 bewegt sich entsprechend der Verriegelungsstift 23 in Entriegelungsstellung 20, siehe Figur 2, so dass Steckgehäusemodul 1 von seinem Steckplatz 3 abziehbar ist.

Die entsprechende Einsetznut 31 ist ebenfalls im entsprechenden Gerüst 7 beziehungsweise in einer Tragschiene 6 der Schalt-/Verteileranlage 2 angeordnet.

In Figur 3 ist eine vergrößerte Darstellung des Details "X" aus Figur 2 dargestellt. Insbesondere ist erkennbar, in welcher Weise der Verriegelungsstift 23 mit einer Schaltwelle 19 verbunden ist, an deren einem Ende der entsprechende Handgriff 18 für Spannungsschalter 17 beziehungsweise Schalteinrichtung 10 angeordnet ist, siehe auch Figur 4.

Die Bewegungsverbindung zwischen Verriegelungsstift 23 und Schaltwelle 19 erfolgt über eine Schlitzplatte 26, die sich im Wesentlichen senkrecht zur Schaltwelle 19 erstreckt. In dieser Schlitzplatte 26 ist ein gekrümmter Schlitz 28 als Schlitzführung 27 für ein Ende 25 des Verriegelungsstiftes 23 ausgebildet. An dem entsprechenden Ende 25 des Verriegelungsstiftes 23 ist dieser mittels eines in Richtung Führungsschlitz 28 abstehenden Führungselements 55 in den Führungsschlitz 28 eingesteckt und dort verschieblich gelagert.

Der Führungsschlitz 28 ist so in der Schlitzplatte 26 angeordnet, dass ein entsprechender Abstand 29 zur Schaltwelle 19 derart variiert, dass er in Entriegelungsstellung 20 minimal und in Verriegelungsstellung 21 maximal ist. In Figur 3 ist der entsprechende Verriegelungsstift 23 in Verriegelungsstellung 21 dargestellt. Das heißt, der Abstand zwischen Führungsschlitz 8 und Schaltwelle 19 ist in dieser Stellung maximal.

Wird in Figur 3 die Schlitzplatte 26 mittels der Schaltwelle 19 in Uhrzeigerrichtung gedreht, bewegt sich der Verriegelungsstift 23 durch die Verminderung des Abstands 29 zwischen Führungsschlitz 28 und Schaltwelle 19 in Richtung Schaltwelle 19 und wird aus der entsprechenden Verriegelungsaufnahme 24 bis in Entriegelungsstellung 20 herausgezogen.

Zum vollständigen Verschwenken der Schlitzplatte 26 und zum Verstellen des Verriegelungsstiftes 23 zwischen Verriegelungsstellung 21 und Entriegelungsstellung 20 ist ungefähr ein Schwenkwinkel von 90° erforderlich, siehe auch die beiden Stellungen der Schalteinrichtung 10 in Figur 1.

Figur 4 zeigt einen teilweise dargestellten Längsschnitt durch das Steckgehäusemodul 1 nach Figuren 1 oder 2. Die Schaltwelle 19 erstreckt sich innerhalb des Steckgehäusemoduls 1 vom Handgriff 18 der Schalteinrichtung 10 beziehungsweise des Spannungsschalters 17 bis zu den Gehäuseteilen 13, 14, wo insbesondere eine Spannungsversorgung der in den Gehäuseteilen enthaltenen elektrischen elektronischen Einrichtungen ein- beziehungsweise ausschaltbar ist.

Die entsprechenden Führungen 52, siehe auch Figur 1, sind beidseitig zum Steckgehäusemodul 1 angeordnet und dienen zur Führung des Steckgehäusemoduls in Einsteckrichtung 32.

In der dargestellten Stellung des Steckgehäusemoduls 1 relativ zum seinem Steckplatz 3 ist dieses nur teilweise eingesteckt und beispielsweise noch kein Kontakt zu den entsprechenden elektrischen Verbindungseinrichtungen 5 des Steckplatzes 3 hergestellt. Auch das entsprechende Einrastelement 30 als Teil der mechanischen Sperreinrichtung 12 ist noch nicht in die Einsetznut 31 eingeführt.

Das Einrastelement 30 steht seitlich vom Handhabungsendabschnitt 40 ab, siehe auch Figur 1, und weist in Richtung der Einsetznut 31. Das Einrastelement 30 ist in einer Wandung des Steckgehäusemoduls 1 entlang eines Langloches 58 in Auslenkrichtung 33 verstellbar. Durch ein Federelement 34 ist das Einrastelement 30 in Richtung zur Schaltwelle 19 vorgespannt und liegt in Figur 4 an einem linken Ende des Langloches 58 an.

Mittels des Handhabungsendabschnitts 40 ist das Einrastelement 30 gegen die Federbeaufschlagung durch das Federelement 34 entlang des Langloches 58 verschiebbar.

Innerhalb der Tragschiene 6 des Gerüsts 7 der Schalt-/Verteileranlage 2 ist die Einsetznut 31 angeordnet. Diese weist ein in Richtung Einrastelement 30 weisendes offenes Ende 35 auf, in das bei weiterem Einschieben des Steckgehäusemoduls 1 in Richtung Steckplatz 3 das Einrastelement 30 eingeführt wird.

Nach Figur 4 und der entsprechenden Anordnung des Einrastelements 30 im Langloch 58 trifft das Einrastelement 30 zuerst auf eine Einsetzschräge 36 am offenen Ende 35 der Einsetznut 31. Diese Einsetzschräge 36 ist entgegengerichtet zur Federbeaufschlagung in Auslenkrichtung 33 und in Figur 4 nach unten geneigt. Die Einsetzschräge 36 dient zum automatischen Auslenken des Einrastelements 30 bei Auftreffen auf die Einsetzschräge. Die Auslenkung erfolgt dabei entgegen der Federbeaufschlagung durch Federelement 34. Anschließend wird bei einem weiteren Verschieben des Steckgehäusemoduls 1 in Einsteckrichtung 32 das Einrastelement entlang der Einsetznut 31 weitergeführt und bewegt sich entlang einer (entgegengesetzt zur Einsetzschräge geneigten) Ablenkschräge 53 wieder im Wesentlichen in die Stellung nach Figur 4 relativ zum Langloch 58. Anschließend an die Ablenkschräge 53 erstreckt sich die Einsetznut 31 im Wesentlichen parallel zur Schaltwelle 19.

Zwischen Einsetzschräge 36 und Ablenkschräge 53 ist ein Anschlag 37 gebildet, der sich im Wesentlichen in Auslenkrichtung 33 erstreckt. Beim Herausziehen des Steckgehäusemoduls 1 aus dem Steckplatz 3, das heißt entgegengesetzt zur Einsteckrichtung 32, gerät das Einrastelement 30 mit dem Anschlag 37 in Anlage, siehe auch die Richtung der Federbeaufschlagung durch Federelement 34. Durch diese Anlage zwischen Einrastelement 30 und Anschlag 37 ist eine Trennstellung 11 festgelegt, siehe Figur 7, in der eine Kontaktierung der entsprechenden Gegensteckkontakte 43 des Steckgehäusemoduls 1 mit Steckkontakten 42 als elektrischer Verbindungseinrichtung 5 der Schalt-/Verteileranlage 2 aufgehoben ist, siehe nochmals Figur 7.

In Figur 4 ist noch durch Pfeile 56 und 57 prinzipiell die Bewegung des Einrastelements 30 dargestellt, wobei Pfeilrichtung 56 einem Einsetzen des Steckgehäusemoduls und Pfeilrichtung 57 einem Herausziehen des Steckgehäusemoduls in beziehungsweise aus Steckplatz 3 entspricht.

Um das Steckgehäusemoduls 1 aus der Trennstellung 11 weiter zu bewegen und vollständig aus der Schalt-/Verteileranlage 2 zu entfernen, kann mittels des Handhabungsendabschnitts 40 das Einrastelement 30 aus Anlage mit Anschlag 37 in Figur 4 nach rechts bewegt werden, siehe auch Pfeilrichtung 57, und anschließend bis zum offenen Ende 35 der Einsetznut 31 verschoben werden.

In den Figuren 5 und 7 sind entsprechende Stellungen des Steckgehäusemoduls 1 dargestellt, wobei Figur 5 der Einsteckstellung 4 und Figur 7 der Trennstellung 11 entspricht. Diese entsprechenden Stellungen sind in den Figuren 6 und 8 nochmals mit Bezug auf Einsetznut 31 und Einrastelement 30 dargestellt.

In Figuren 5 und 7 ist insbesondere erkennbar, dass die entsprechenden Gehäuseteile 13 und 14 mittels ihrer Ränder 15 und 16 druckfest und durchschlagssicher durch Vibrationsschweißen und insbesondere lineares Reibschweißen verbunden sind. Dadurch sind keine zusätzlichen Maßnahmen zur Verbindung dieser Gehäuseteile notwendig, um die entsprechen elektrischen und elektronischen Komponenten im Inneren der Gehäuseteile zum erforderlichen Explosionsschutz anzuordnen.

Auf der Unterseite des Gehäuseteils 14 sind die entsprechenden Gegensteckkontakte 43 angeordnet, die innerhalb der Gehäuseteile 13, 14 mit den elektrischen/elektronischen Komponenten verbunden sind. Die Gegensteckkontakte 43 sind im Wesentlichen als Steckerbuchsen 51 ausgebildet. Diese sind im Bereich des Bodens des Gehäuseteils 14 von Kontaktaufnahmen 45 umgeben, siehe auch Figur 2, wobei diese Kontaktaufnahmen einen im Wesentlichen kreisförmigen Querschnitt aufweisen. Die Kontaktaufnahmen erstrecken sich bis über freie Enden 48 der entsprechenden Gegensteckkontakte 43 in Richtung Steckplatz 3 und dort angeordneter Steckkontakte 42 in Form von Steckerstiften 50. Auch diese Steckerstifte 50 sind von entsprechenden Kontaktaufnahmen 44 umgeben, die sich ebenfalls bis über freie Enden 47 der Steckkontakte 42 erstrecken. Die Kontakte können auch kammförmig und mit den Anschlussschienen 42a verbunden sein.

In der dargestellten Einsteckstellung 4 nach Figur 4 sind Steckerstifte 50 und Steckerbuchsen 51 in Kontakt miteinander, so dass eine elektrische Verbindung zwischen Steckgehäusemodul 1 und Schalt-/Verteileranlage 2 hergestellt ist.

Es sei noch darauf hingewiesen, dass auch andere Formen von Kontakten möglich sind, wie beispielsweise schienenförmige Steckkontakte, insbesondere Anschlussschienen, wobei die entsprechenden Gegensteckkontakte dann analog ausgebildet sind.

Nach Figur 6 ist in Einsteckstellung 4 des Steckgehäusemoduls 1 das Einrastelement 30 bis zu einem unteren Ende der Einsetznut 31 in dieser verschoben, siehe auch Figur 4 mit entsprechender Pfeilrichtung 56. In dieser Stellung ist die Schalteinrichtung 10 beziehungsweise der Spannungsschalter 17 betätigbar und entsprechend das Verriegelungselement 22 zwischen Entriegelungsstellung 20 und Verriegelungsstellung 21 verstellbar. In der Verriegelungsstellung 21 des Verriegelungselements 22 ist gleichzeitig die Spannungsversorgung der entsprechenden Komponenten des Steckgehäusemoduls 1 durch den Spannungsschalter 17 eingeschaltet.

Soll das Steckgehäusemodul 1 aus dem Steckplatz 3 herausgezogen werden, so ist zuerst eine Verstellung der Schalteinrichtung 10 notwendig, so dass das Verriegelungselement 22 in Entriegelungsstellung 20 verstellt und entsprechend die elektrischen und elektronischen Komponenten des Steckgehäusemoduls 1 hinsichtlich der Spannungsversorgung ausgeschaltet sind.

Nach diesem Schalten kann das Steckgehäusemodul 1 entgegengesetzt zur Einsteckrichtung 32 aus dem Steckplatz 3 herausgezogen werden, siehe Figur 7, bis das Einrastelement 30 mit dem Anschlag 37 der Einsetznut 31 in Anlage ist, siehe Figur 8 und Figur 4 mit Pfeilrichtung 57. In dieser Trennstellung 11 sind die Kontakte, siehe Figur 7. bereits soweit voneinander getrennt, dass zwischen deren Enden 47 und 48 ein Freiraum 46 gebildet ist. Weiterhin ist zwischen Kontaktaufnahme 45 und Steckerstift 5 ein Flammenlöschspalt 49 gebildet, der gegebenenfalls eine Zündung eines explosiblen Gases innerhalb des Freiraumes 46 bei Trennung der Kontakte nach Figur 7 auf diesen Freiraum begrenzt und ein Durchschlagen der Flamme in Richtung Steckplatz 3 verhindert.

Erst wenn durch den Handhabungsendabschnitt 40, siehe Figuren 8 und 4, das Einrastelement 30 in Figur 8 nach links bewegt wird und nicht mehr mit Anschlag 37 in Anlage ist, kann das Einrastelement 30 weiter entlang der Einsetznut 31 bis zu ihrem offenen Ende 35 bewegt und damit Steckgehäusemodul 1 vollständig von der Schalt-/Verteileranlage 2 entnommen werden.

Erfindungsgemäß besteht somit die Möglichkeit, in einfacher und konstruktiver Weise auch unterschiedliche Steckgehäusemodule in einer Schalt-/Verteileranlage 2 einzusetzen, wobei die entsprechenden Steckgehäusemodule als gekapselte und druckfeste Gehäuse insbesondere mittels der verbundenen Gehäuseteile ausgebildet sind. Durch diese entsprechende Steckgehäusemodule ergibt sich damit eine Schalt-/Verteileranlage mit Zündschutzart "erhöhter Sicherheit". Die entsprechenden elektrischen/elektronischen Einrichtungen des Steckgehäusemoduls können je nach Anforderung ausgebildet sein, wobei Beispiele für solche Einrichtungen Sicherungsautomaten, Schutzschalter, Schütze, Relais, Leistungsschalter und dergleichen sind.

Durch die entsprechenden Sicherungsmaßnahmen sowohl beim Einsetzen als auch beim Herausziehen des Steckgehäusemoduls in Richtung beziehungsweise aus Richtung Steckplatz kann die entsprechende Montage auch durch Personen erfolgen, die keine spezielle Ausbildung für den Explosionsschutz haben. Die Schritte insbesondere beim Herausziehen des Steckgehäusemoduls 1 müssen entsprechend durchgeführt werden, wobei durch die Abfolge dieser Schritte, siehe Betätigen der Schalteinrichtung 10 und der mechanischen Sperreinrichtung 12 immer sichergestellt ist, dass allen Anforderungen des Explosionsschutzes genügt wird.

## Patentansprüche

1. Steckgehäusemodul (1) zur Bildung einer insbesondere explosionsgeschützten Schalt- und/oder Verteileranlage (2) mit einer Anzahl von Steckplätzen (3), wobei das Steckgehäusemodul (1) derart ausgebildet ist, dass es bei Einnehmen einer Einsteckstellung (4) elektrische Verbindungseinrichtungen (5) der Schalt-/ Verteileranlage kontaktiert und in der Einsteckstellung (4) an Tragschienen (6) oder dergleichen eines Gerüsts (7) der Schalt- /Verteileranlage (2) lösbar mittels eines Verriegelungselements befestigbar ist, welches Steckgehäusemodul (1) wenigstens eine von außen zum Schalten zwischen einer Verriegelungs- und einer Lösestellung (8, 9) zugängliche Schalteinrichtung (10) aufweist, wobei in Lösestellung (9) das Steckgehäusemodul (1) in eine Trennstellung (11) aus seiner Einsteckstellung (4) bewegbar ist, in welcher Trennstellung (11) der Kontakt zur Verbindungseinrichtung (5) getrennt ist, wobei die Trennstellung (11) relativ zum Steckplatz (3) mittels einer mechanischen Sperreinrichtung (12) festgelegt ist, und wobei nach Lösen der Sperreinrichtung (12) das Steckgehäusemodul (1) vollständig aus seinem Steckplatz (3) herausziehbar ist, **dadurch gekennzeichnet, dass** die Schalteinrichtung (10) eine mit einem Handgriff (18) verbundene Schaltwelle (19) aufweist, mittels welcher das Verriegelungselement (22) zwischen Verriegelungs-und Entriegelungsstellung (21, 20) bewegbar ist, wobei in der Trennstellung (11) der Kontakt zur Verbindungseinrichtung (5) unter Aufrechterhaltung einer zünddurchschlagssicheren mechanischen Verbindung getrennt ist.

2. Steckgehäusemodul nach Anspruch 1, **dadurch gekennzeichnet, dass** dieses aus zumindest zwei Gehäuseteilen (13, 14) zünddurchschlagssicher zusammengesetzt ist.

3. Steckgehäusemodul nach Anspruch 2, **dadurch gekennzeichnet, dass** die Gehäuseteile (13, 14) aufeinander zuweisende Ränder (15, 16) aufweisen, die durch Vibrationsschweißen, insbesondere lineares Reibschweißen miteinander verbunden sind.

4. Steckgehäusemodul nach einem der vorangehenden Ansprüche, **dadurch gekennzeichnet, dass** die Schalteinrichtung (10) als Spannungsschalter (17) ausgebildet ist, welcher in Verriegelungsstellung (8) in Ein- und in Lösestellung (9) in Ausschaltstellung angeordnet ist.

5. Steckgehäusemodul nach einem der vorangehenden Ansprüche, **dadurch gekennzeichnet, dass** das Verriegelungselement (22) ein Verriegelungsstift (23) ist, der in Verriegelungsstellung (21) aus dem Steckgehäusemodul (1) vorsteht und in Eingriff mit einer Verriegelungsaufnahme (24) des Steckplatzes (3) der Schalt-/ Verteileranlage ist.

6. Steckgehäusemodul nach einem der vorangehenden Ansprüche, **dadurch gekennzeichnet, dass** das Verriegelungselement (22) an seinem der Schaltwelle (19) zuweisenden Ende (25) in einer mit der Schaltwelle bewegungsverbundenen Schlitzplatte (26) innerhalb einer Schlitzführung (27) beweglich gelagert ist.

7. Steckgehäusemodul nach Anspruch 6, **dadurch gekennzeichnet, dass** die Schlitzführung (27) einen Führungsschlitz (28) aufweist, dessen Abstand (29) zur Schaltwelle (19) in Lösestellung (9) zur Anordnung des Verriegelungselement in Entriegelungsstellung (20) am geringsten ist.

8. Steckgehäusemodul nach Anspruch 6 oder 7, **dadurch gekennzeichnet, dass** die Schlitzplatte (26) im Wesentlichen senkrecht zur Schaltwelle (19) angeordnet ist.

9. Steckgehäusemodul nach einem der vorangegangenen Ansprüche, **dadurch gekennzeichnet, dass** die Sperreinrichtung (12) ein selbsttätig mit einer Rastaufnahmeeinrichtung (31) an einem Steckplatz (3) der Schalt-/Verteileranlage bei Einschieben des Steckgehäusemoduls (1) in Einsteckstellung verrastendes Einrastelement (30) aufweist.

10. Steckgehäusemodul nach Anspruch 9, **dadurch gekennzeichnet, dass** das Einrastelement (30) seitlich vom Steckgehäusemodul (1) vorsteht und entlang einer entgegengesetzt zur Einsteckrichtung (32) des Steckgehäusemoduls (1) offenen Einsetznut (31) als Rastaufnahmeeinrichtung bewegbar ist.

11. Steckgehäusemodul nach Anspruch 9 oder 10, **dadurch gekennzeichnet, dass** das Einrastelement (30) im Steckgehäusemodul (1) im Wesentlichen quer zur Einsteckrichtung (32) verschieblich in Auslenkrichtung (33) gelagert ist.

12. Steckgehäusemodul nach Anspruch 11, **dadurch gekennzeichnet, dass** das Einrastelement (30) in Auslenkrichtung (33) federbeaufschlagt ist.

13. Steckgehäusemodul nach einem der vorangehenden Ansprüche, **dadurch gekennzeichnet, dass** das Steckgehäusemodul (1) einen die Gehäuseteile (13, 14) zumindest teilweise aufnehmenden Gehäuserahmen (38) aufweist.

14. Steckgehäusemodul nach Anspruch 13, **dadurch gekennzeichnet, dass** der Gehäuserahmen (38) einen Handgriff zum Verschieben des Steckgehäusemoduls (1) in Einsteckrichtung (32) aufweist.

15. Steckgehäusemodul nach einem der vorangehenden Ansprüche 9-14, **dadurch gekennzeichnet, dass** das Einrastelement (30) einen vom Steckgehäusemodul (1) vorstehenden Handhabungsendabschnitt (40) aufweist.

16. Steckgehäusemodul nach Anspruch 15, **dadurch gekennzeichnet, dass** der Handhabungsendabschnitt (40) in einem Führungsschlitz (41) des Steckgehäusemoduls (1) verschieblich gelagert ist.

17. Schalt-/Verteileranlage (2) mit einer Anzahl von Steckplätzen (3) und diesen zugeordneten elektrischen Verbindungseinrichtungen (5, 42), wobei in jeden Steckplatz (3) ein Steckgehäusemodul (1) nach einem der vorangehenden Ansprüche einsetzbar ist, wobei jeder Steckplatz eine Verriegelungsaufnahme für den Eingriff des Verriegelungselments des Steckgehäusemoduls aufweist, wobei jeder Steckplatz zur Aufnahme eines Einrastelements der Sperreinrichtung des Steckgehäusemoduls eine entlang einer entgegengesetzt zur Einsteckrichtung (32) des Steckgehäusemoduls (1) offenen Einsetznut (31) als Rastaufnahmeeinrichtung aufweist.

18. Schalt-/Verteileranlage (2) nach Anspruch 17, **dadurch gekennzeichnet, dass** die Einsetznut (31) an ihrem offenen Ende (35) eine schräg nach unten in Einsteckrichtung (32) verlaufende Einsetzschräge (36) aufweist.

19. Schalt-/Verteileranlage (2) nach Anspruch 18, **dadurch gekennzeichnet, dass** in Einsteckrichtung (32) unterhalb der Einsetzschräge (36) ein sich im Wesentlichen in Auslenkrichtung (33) sich erstreckende Anschlag (37) gebildet ist, wobei die Federbeaufschlagung des Einrastelements (30) in Richtung zum Anschlag erfolgt.

20. Schalt-/Verteileranlage (2) nach Anspruch 19, **dadurch gekennzeichnet, dass** die Einsetznut (31) sich anschließend an den Anschlag (37) im Wesentlichen in Einsteckrichtung (32) erstreckt.

21. Schalt-/Verteileranlage (2) nach einem der vorangehenden Ansprüche, **dadurch gekennzeichnet, dass** die elektrische Verbindungseinrichtung (5) durch elektrische Steck- beziehungsweise Gegensteckkontakte gebildet ist und entsprechend Gegen- oder Steckkontakte am Steckgehäusemodul (1) angeordnet sind.

22. Schalt-/Verteileranlage (2) nach Anspruch 21, **dadurch gekennzeichnet, dass** die Kontakte von einem Rand (54) umrandet sind.

23. Schalt-/Verteileranlage (2) nach Anspruch 21 oder 22, **dadurch gekennzeichnet, dass** die Steckkontakte als elektrische Verbindungseinrichtung (5) kammförmig, insbesondere mit Anschlussschienen (42a) verbunden sind.

24. Schalt-/Verteileranlage (2) nach einem der vorangehenden Ansprüche 21-23, **dadurch gekennzeichnet, dass** elektrische Steck- und/oder Gegensteckkontakte innerhalb von jeweils zu den anderen Kontakten offenen Kontaktaufnahmen (44, 45) angeordnet sind.

25. Schalt-/Verteileranlage (2) nach Anspruch 24, **dadurch gekennzeichnet, dass** die Kontaktaufnahmen (44, 45) in Einsteckstellung (4) und in Trennstellung (11) ineinander gesteckt sind und in Trennstellung (11) einen Freiraum (46) zwischen freien Enden (47, 48) der getrennten Steck- und Gegensteckkontakte (42, 43) begrenzen.

26. Schalt-/Verteileranlage (2) nach Anspruch 24 oder 25, **dadurch gekennzeichnet, dass** ein Flammenlöschspalt (49) zwischen wenigstens einer Kontaktaufnahme (44, 45) und dem entsprechenden Kontakt (42, 43) zumindest in Trennstellung (11) gebildet ist.

27. Schalt-/Verteileranlage (2) nach einem der vorangehenden Ansprüche 24-26, **dadurch gekennzeichnet, dass** Steck- und Gegensteckkontakte (42, 43) als Steckerstifte (50) und Steckerbuchsen (51) ausgebildet sind.

28. Schalt-/Verteileranlage (2) nach einem der vorangehenden Ansprüche 17-27, **dadurch gekennzeichnet, dass** jedem Steckplatz (3) Führungen (52) für das Steckgehäusemodul (1) zum Verschieben in Einsteckrichtung (32) zugeordnet sind.

29. Schalt-/Verteileranlage (2) nach einem der vorangehenden Ansprüche 18-20, **dadurch gekennzeichnet, dass** die Einsetznut (31) in Einsteckrichtung (32) nachfolgend zur Einsetzschräge (36) eine in entgegengesetzter Richtung relativ zur Auslenkrichtung (33) geneigte Ablenkschräge (53) aufweist.

## Claims

1. A plug-in housing module (1) for forming an especially explosion-proof switchgear/distribution panel (2) comprising a number of plug-in points (3), wherein said plug-in housing module (1) is configured such that it contacts by occupying its plugged-in position (4) electrical connection devices (5) of the switchgear/distribution panel (2) and is detachably fixed to carrier rails (6) or the like of a frame (7) of the switchgear/distribution panel (2) in the plugged-in position (4) by a locking element, which plug-in housing module (1) comprises at least one switching device (10) which is accessible from the outside for switching between a locking position and a release position (8, 9) and, in release position, the plug-in housing module (1) can be moved out of its plugged-in position (4) into a separation position (11), wherein in the separation position (11), the contact with the electrical connection device (5) is interrupted, while maintaining a flameproof mechanical connection, and the separation position (11) is determined in relation to the plug-in point (3) by means of a mechanical locking device (12), wherein once the locking device (12) has been released, the plug-in housing module (1) can be fully removed from its plug-in point (3),
**characterized in**
**that** the switching device (10) comprises a switching shaft (19) connected to a handle (18), by means of which said locking element (22) is movable between locking and unlocking position (21, 20), wherein the contact to the connection device (5) is separated in separation position (11), maintaining a flameproof mechanical connection.

2. The plug-in housing module according to claim 1,
**characterized in**
**that** said module is composed of at least two housing parts (13, 14) in a flameproof manner.

3. The plug-in housing module according to claim 2,
**characterized in**
**that** the housing parts (13, 14) have edges (15, 16) oriented towards each other, which are interconnected by vibration welding, particularly linear friction welding.

4. The plug-in housing module according to any one of the preceding claims,
**characterized in**
**that** the switching device (10) is configured as a voltage switch (17) which in the locking position (8) is arranged in on-position and in release position (9) in off-position.

5. The plug-in housing module according to any one of the preceding claims,
**characterized in**
**that** the locking element (22) is a locking pin (23) which in locking position (21) protrudes out of the plug-in housing module (1) and is in engagement with a locking accommodation (24) of the plug-in point (3) of the switchgear/distribution panel (2).

6. The plug-in housing module according to any one of the preceding claims,
**characterized in**
**that** the locking element (22) is movably supported within a slotted guide (27) at its end (25) oriented towards the switching shaft (19) in a slotted plate (26) that is motion-connected to the switching shaft.

7. The plug-in housing module according to any one of the preceding claims,
**characterized in**
**that** the slotted guide (27) comprises a guide slot (28) the distance (29) of which relative to the switching shaft (19) is minimal in release position (9) for arranging the locking element in unlocking position (20).

8. The plug-in housing module according to any one of the preceding claims,
**characterized in**
**that** the slotted plate (26) is arranged substantially perpendicular to the switching shaft (19).

9. The plug-in housing module according to any one of the preceding claims,
**characterized in**
**that** the locking device (12) comprises a snap-in element (30) which automatically locks with a lock accommodating device (21) at a plug-in point (3) of the switchgear/distribution panel (2) during insertion of the plug-in housing module (1) in plugged-in position.

10. The plug-in housing module according to claim 9,
**characterized in**
**that** the snap-in element (30) protrudes laterally from the plug-in housing module (1) and is movable along an insertion groove (31) that is open in a direction opposite to the plug-in direction (32) of the plug-in housing module (1), as a lock accommodating device.

11. The plug-in housing module according to claims 9 or 10,
**characterized in**
**that** the snap-in element (30) in the plug-in housing module (1) is displaceably supported in deflection direction (33) substantially in a direction transverse to the plug-in direction (32).

12. The plug-in housing module according to claim 11,
**characterized in**
**that** the snap-in element (30) is spring-loaded in deflection direction (33).

13. The plug-in housing module according to any one of the preceding claims,
**characterized in**
**that** the plug-in housing module (1) comprises a housing frame (38) accommodating the housing parts (13, 14) at least in part.

14. The plug-in housing module according to claim 13,
**characterized in**
**that** the housing frame (38) comprises a handle for displacing the plug-in housing module (1) in plug-in direction (32).

15. The plug-in housing module according to any one of claims 9 to 14,
**characterized in**
**that** the snap-in element (30) comprises a handling end section (40) protruding from the plug-in housing module (1).

16. The plug-in housing module according to claim 15,
**characterized in**
**that** the handling end section (40) is displaceably supported in a guide slot (41) of the plug-in housing module (1).

17. A switchgear/distribution panel (2) comprising a number of plug-in points (3) and electrical connection devices (5, 42) assigned thereto, wherein a plug-in housing module (1) according to any one of the preceding claims can be inserted in each plug-in point (3), each plug-in point comprising a locking accommodation for engagement with the locking element of the plug-in housing module, wherein each plug-in point comprises an insertion groove (31) as a lock accommodation device that is open in a direction opposite to the plug-in direction (32) of the plug-in housing module (1), said open insertion groove being used for accommodating a locking element of the locking device.

18. The switchgear/distribution panel (2) according to claim 17,
**characterized in**
**that** the insertion groove (31) at its open end (35) has an insertion slope (36) extending obliquely downwards in plug-in direction (32).

19. The switchgear/distribution panel (2) according to claim 18,
**characterized in**
**that** a stop extending substantially in deflection direction (33) is formed in plug-in direction (32) underneath the insertion slope (36), the spring loading of the snap-in element (30) being exerted in a direction towards the stop.

20. The switchgear/distribution panel (2) according to claim 19,
**characterized in**
**that** the insertion groove (31) extends after the stop (37) substantially in plug-in direction (32).

21. The switchgear/distribution panel (2) according to one of the preceding claims, **characterized in**
**that** the electrical connection device (5) is formed by electrical plug contacts and mating-plug contacts, respectively, and mating-plug contacts or plug contacts are correspondingly arranged on the plug-in housing module (1).

22. The switchgear/distribution panel (2) according to claim 21,
**characterized in**
**that** the contacts are surrounded by an edge (54).

23. The switchgear/distribution panel (2) according to claim 21 or 22,
**characterized in**
**that** the plug contacts as the electrical connection device (5) are of a meshing type, particularly connected to connecting bars (42a).

24. The switchgear/distribution panel (2) according to one of claims 21 to 23, **characterized in**
**that** the electrical plug and/or mating-plug contacts are arranged inside open contact accommodations (44, 45) that are respectively open to the other contacts.

25. The switchgear/distribution panel (2) according to claim 24,
**characterized in**
**that** the contact accommodations (44, 45) are plugged into one another in plugged-in position (4) and in separation position (11) and, in separation position (11), define a free space (46) between free ends (47, 48) of the separated plug and mating-plug contacts (42, 43).

26. The switchgear/distribution panel (2) according to claim 24 or 25,
**characterized in**
**that** a flame extinguishing gap (49) is formed between at least one contact accommodation (44, 45) and the corresponding contact (42, 43) at least in separation position (11).

27. The switchgear/distribution panel (2) according to one of claims 24 to 26,
**characterized in**
**that** plug and mating-plug contacts (42, 43) are configured as plug pins (50) and sockets (51).

28. The switchgear/distribution panel (2) according to one of claims 17 to 27,
**characterized in**
**that** guides (52) for the plug-in housing module (1) are assigned to each plug-in point (3) for displacement in plug-in direction (32).

29. The switchgear/distribution panel (2) according to one of claims 18 to 20,
**characterized in**
**that** in insertion direction (32) following the insertion slope (36) the insertion groove (31) comprises a deflection slope (53) inclined in opposite direction relative to the deflection direction (33).

## Revendications

1. Module de boîtier enfichable (1) pour la formation d'une installation de commutation et/ou de distribution (2) antidéflagrante avec plusieurs emplacements d'enfichage (3), le module de boîtier enfichable (1) étant constitué de telle sorte que, lorsqu'il occupe une position d'enfichage (4), il met en contact des systèmes de connexion (5) électriques de l'installation de commutation/distribution et que, dans la position d'enfichage (4), il peut être fixé de façon amovible au moyen d'un élément de verrouillage sur des rails de support (6) ou similaires d'une ossature (7) de l'installation de commutation et/ou de distribution (2), lequel module de boîtier enfichable (1) présente au moins un système de commutation (10) accessible à partir de l'extérieur pour la commutation entre une position de verrouillage et une position de relâchement (8, 9), le module de boîtier enfichable (1) étant, dans la position de relâchement (9), mobile vers une position de séparation (11) à partir de sa position d'enfichage (4), dans laquelle position de séparation (11) le contact avec le système de connexion (5) est séparé, la position de séparation (11) par rapport à l'emplacement d'enfichage (3) est immobilisée au moyen d'un système de blocage (12) mécanique et, après le relâchement du système de blocage (12), le module de boîtier enfichable (1) peut être complètement extrait de son emplacement d'enfichage (3),
**caractérisé en ce que**
le système de commutation (10) présente un arbre de commande (19) raccordé à une poignée (18) au moyen duquel l'élément de verrouillage (22) est mobile entre la position de verrouillage et la position de déverrouillage (21, 20), le contact avec le système de connexion (5) étant, dans la position de séparation (11), séparé avec maintien d'un raccordement mécanique protégé contre le claquage d'amorçage.

2. Module de boîtier enfichable (1) selon la revendication 1, **caractérisé en ce que** celui-ci est composé, de façon protégée contre le claquage d'amorçage, d'au moins deux parties de boîtier (13, 14).

3. Module de boîtier enfichable (1) selon la revendication 2, **caractérisé en ce que** les parties de boîtier (13, 14) présentent des bords (15, 16) dirigés l'un vers l'autre qui sont raccordés l'un à l'autre par soudage par vibration, en particulier par soudage par friction linéaire.

4. Module de boîtier enfichable (1) selon l'une des revendications précédentes, **caractérisé en ce que** le système de commutation (10) est constitué en tant que commutateur de tension (17) qui, dans la position de verrouillage (8), est disposé dans la position de mise en circuit et, dans la position de relâchement (9), dans la position de mise hors service.

5. Module de boîtier enfichable (1) selon l'une des revendications précédentes, **caractérisé en ce que** l'élément de verrouillage (22) est une broche de verrouillage (23) qui, dans la position de verrouillage (21), fait saillie à partir du module de boîtier enfichable (1) et est en prise avec un logement de verrouillage (24) de l'emplacement d'enfichage (3) de l'installation de commutation/distribution.

6. Module de boîtier enfichable (1) selon l'une des revendications précédentes, **caractérisé en ce que**, à son extrémité (25) dirigée vers l'arbre de commande (19), l'élément de verrouillage (22) est supporté de façon mobile à l'intérieur d'un guide fendu (27) dans une plaque fendue (26) raccordée en mouvement à l'arbre de commande.

7. Module de boîtier enfichable (1) selon la revendication 6, **caractérisé en ce que** le guide fendu (27) présente une fente de guidage (28) dont la distance (29) à l'arbre de commande (19) dans la position de relâchement (9) est la plus faible par rapport à l'agencement de l'élément de verrouillage dans la position de déverrouillage (20).

8. Module de boîtier enfichable (1) selon la revendication 6 ou 7, **caractérisé en ce que** la plaque fendue (26) est disposée de façon essentiellement perpendiculaire à l'arbre de commande (19).

9. Module de boîtier enfichable (1) selon l'une des revendications précédentes, **caractérisé en ce que** le système de blocage (12) présente un élément d'encliquetage (30) s'encliquetant automatiquement avec un système de logement d'encliquetage (31) sur un emplacement d'enfichage (3) de l'installation de commutation/distribution lors de l'introduction du module de boîtier enfichable (1) dans la position d'enfichage.

10. Module de boîtier enfichable (1) selon la revendication 9, **caractérisé en ce que** l'élément d'encliquetage (30) fait saillie latéralement par rapport au module de boîtier enfichable (1) et est mobile le long d'une rainure d'insertion (31), en tant que système de logement d'encliquetage (31), ouverte à l'opposé de la direction d'enfichage (32) du module de boîtier enfichable (1).

11. Module de boîtier enfichable (1) selon la revendication 9 ou 10, **caractérisé en ce que** l'élément d'encliquetage (30) est supporté dans le module de boîtier enfichable (1) de façon coulissante dans la direction de déviation (33) de façon essentiellement transversale à la direction d'enfichage (32).

12. Module de boîtier enfichable (1) selon la revendication 11, **caractérisé en ce que** l'élément d'encliquetage (30) est exposé à l'action d'un ressort dans la direction de déviation (33).

13. Module de boîtier enfichable (1) selon l'une des revendications précédentes, **caractérisé en ce que** le module de boîtier enfichable (1) présente un cadre de boîtier (38) logeant au moins partiellement les parties de boîtier (13, 14).

14. Module de boîtier enfichable (1) selon la revendication 13, **caractérisé en ce que** le cadre de boîtier (38) présente une poignée pour le coulissement du module de boîtier enfichable (1) dans la direction d'enfichage (32).

15. Module de boîtier enfichable (1) selon l'une des revendications précédentes 9 à 14, **caractérisé en ce que** l'élément d'encliquetage (30) présente un tronçon d'extrémité de manipulation (40) faisant saillie à partir du module de boîtier enfichable (1).

16. Module de boîtier enfichable (1) selon la revendication 15, **caractérisé en ce que** le tronçon d'extrémité de manipulation (40) est supporté de façon coulissante dans une fente de guidage (41) du module de boîtier enfichable (1).

17. Installation de commutation/distribution (2) avec plusieurs emplacements d'enfichage (3) et systèmes de connexion (5, 42) électriques affectés à cet emplacement, un module de boîtier enfichable (1) selon l'une des revendications précédentes pouvant être introduit dans chaque emplacement d'enfichage (3), chaque emplacement d'enfichage présentant un logement de verrouillage pour la mise en prise de l'élément de verrouillage du module de boîtier enfichable, chaque emplacement d'enfichage présentant, pour loger un élément d'encliquetage du système de blocage du module de boîtier enfichable, une rainure d'insertion (31), en tant que système de logement d'encliquetage, ouverte le long à l'opposé de la direction d'enfichage (32) du module de boîtier enfichable (1).

18. Installation de commutation/distribution (2) selon la revendication 17, **caractérisée en ce que** la rainure d'insertion (31) présente à son extrémité (35) ouverte une pente d'insertion (36) oblique vers le bas dans la direction d'enfichage (32).

19. Installation de commutation/distribution (2) selon la revendication 18, **caractérisée en ce que**, dans la direction d'enfichage (32), au-dessous de la pente d'insertion (36), il est formé une butée (37) qui s'étend essentiellement dans la direction de déviation (33), l'exposition de l'élément d'encliquetage (30) à l'action d'un ressort s'effectuant en direction de la butée.

20. Installation de commutation/distribution (2) selon la revendication 19, **caractérisée en ce que** la rainure d'insertion (31) s'étend à la suite de la butée (37) essentiellement dans la direction d'enfichage (32).

21. Installation de commutation/distribution (2) selon l'une des revendications précédentes, **caractérisée en ce que** le système de connexion (5) électrique est formé de contacts à fiche ou respectivement à contre-fiche, et des contacts à contre-fiche ou à fiche sont disposés en conséquence sur le module de boîtier enfichable (1).

22. Installation de commutation/distribution (2) selon la revendication 21, **caractérisée en ce que** les contacts sont entourés d'un bord (54).

23. Installation de commutation/distribution (2) selon la revendication 21 ou 22, **caractérisée en ce que** les contacts à fiche en tant que système de connexion (5) électrique sont raccordés en forme de peigne, en particulier à des barres de connexion (42a).

24. Installation de commutation/distribution (2) selon l'une des revendications précédentes 21 à 23, **caractérisée en ce que** des contacts à fiche et/ou à contre-fiche électriques sont disposés à l'intérieur de logements de contact (44, 45) respectivement ouverts vers les autres contacts.

25. Installation de commutation/distribution (2) selon la revendication 24, **caractérisée en ce que** les logements de contact (44, 45) sont enfichés les uns dans les autres dans la position d'enfichage (4) et, dans la position de séparation (11), limitent un espace libre (46) entre des extrémités (47, 48) libres des contacts à fiche et à contre-fiche (42, 43) séparés.

26. Installation de commutation/distribution (2) selon la revendication 24 ou 25, **caractérisée en ce que**, au moins dans la position de séparation (11), il est formé un interstice d'extinction de flamme (49) entre au moins un logement de contact (44, 45) et le contact (42, 43) correspondant.

27. Installation de commutation/distribution (2) selon l'une des revendications précédentes 24 à 26, **caractérisée en ce que** des contacts à fiche et à contre-fiche (42, 43) sont constitués en tant que broches (50) et alvéoles (51).

28. Installation de commutation/distribution (2) selon l'une des revendications précédentes 17 à 27, **caractérisée en ce qu'**à chaque emplacement d'enfichage (3) sont affectés des guidages (52) pour le module de boîtier enfichable (1) pour le coulissement dans la direction d'enfichage (32).

29. Installation de commutation/distribution (2) selon l'une des revendications précédentes 18 à 20, **caractérisée en ce que** la rainure d'insertion (31) présente, dans la direction d'enfichage (32) à la suite de la pente d'insertion (36), une pente de détournement (53) inclinée dans une direction opposée par rapport à la direction de déviation (33).
